(19) Europäisches Patentamt
European Patent Office
Office européen des brevets

(11) **EP 1 853 898 B1**

(12) **FASCICULE DE BREVET EUROPEEN**

(45) Date de publication et mention de la délivrance du brevet:
**06.08.2008 Bulletin 2008/32**

(21) Numéro de dépôt: **06726196.6**

(22) Date de dépôt: **22.02.2006**

(51) Int Cl.:
***G01N 21/71*** *(2006.01)*

(86) Numéro de dépôt international:
**PCT/FR2006/050158**

(87) Numéro de publication internationale:
**WO 2006/092520 (08.09.2006 Gazette 2006/36)**

(54) **PROCÉDÉ ET SYSTÈME D'ANALYSE PHYSICOCHIMIQUE À L'AIDE D'UNE ABLATION PAR PULSE LASER**

VERFAHREN UND SYSTEM ZUR PHYSIKOCHEMISCHEN ANALYSE MITTELS LASERGEPULSTER ABLATION

METHOD AND SYSTEM FOR PHYSICOCHEMICAL ANALYSIS USING A LASER PULSED ABLATION

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **28.02.2005 FR 0550533**

(43) Date de publication de la demande:
**14.11.2007 Bulletin 2007/46**

(73) Titulaire: **COMMISSARIAT A L'ENERGIE ATOMIQUE**
**75015 Paris (FR)**

(72) Inventeurs:
• **L'HERMITE, Daniel**
**F-91470 Les Molieres (FR)**
• **MAUCHIEN, Patrick**
**F-91120 Palaiseau (FR)**
• **LACOUR, Jean-luc**
**Rés. Le Clos D'alençon**
**91140 Villebon Sur Yvette (FR)**

(74) Mandataire: **Poulin, Gérard**
**BREVALEX**
**3, rue du Docteur Lancereaux**
**75008 Paris (FR)**

(56) Documents cités:
**US-A- 4 690 558        US-A- 5 991 020**

• **CHALEARD C ET AL: "CORRECTION OF MATRIX EFFECTS IN QUANTITATIVE ELEMENTAL ANALYSIS WITH LASER ABLATION OPTICAL EMISSION SPECTROMETRY" JOURNAL OF ANALYTICAL ATOMIC SPECTROMETRY, NEW YORK, NY, US, vol. 12, no. 2, février 1997 (1997-02), pages 183-188, XP009019037 cité dans la demande**

**Description**

**Domaine de l'invention :**

La présente invention se rapporte à un procédé et à un dispositif d'analyse physicochimique d'un matériau lors de son ablation par un pulse laser, également dénommé spectroscopie d'émission atomique sur plasma produit par laser ou LIBS pour « Laser Induced Breakdown Spectroscopy » en anglais.

**Problème traité par l'invention :**

Le procédé LIBS présente de nombreux avantages, tels que de permettre l'analyse élémentaire d'un matériau solide, liquide ou gazeux en temps réel, mais il présente des inconvénients liés à la difficile maîtrise des paramètres d'interaction entre le faisceau laser et le matériau à analyser.

En effet, le procédé LIBS utilise une comparaison entre les raies émises par le plasma formé lors de l'impact d'un faisceau laser sur un matériau à analyser et des raies d'étalonnage obtenues avec des matériaux étalons dont la composition est connue.

Ainsi, la longueur d'onde et, respectivement, l'intensité d'une raie dans le plasma formé, permettent de déterminer la présence d'un élément dans le matériau et, respectivement, d'évaluer la concentration de cet élément dans le matériau.

Cependant, le facteur de proportionnalité entre l'intensité I de la raie d'un élément à doser et la concentration C de cet élément dans le matériau dépend de nombreux paramètres propres à la réalisation de la mesure comme, par exemple, la longueur d'onde et/ou la focalisation du laser, la géométrie de la collection de l'émission du plasma, la transmission des optiques, ainsi que des caractéristiques physicochimiques de l'échantillon à analyser et du plasma.

Cette dépendance s'avère problématique puisque les conditions expérimentales avec lesquelles sont établies les courbes d'étalonnage ne peuvent pas toujours être reproduites lors des analyses, notamment au niveau de l'irradiance du laser sur le matériau et des caractéristiques physico-chimiques de ce dernier (effet de matrice), la variation de ces deux paramètres modifiant notamment la quantité de matière ablatée et la température du plasma.

Dès lors, les comparaisons effectuées entre des courbes étalons et des mesures expérimentales, en vue d'analyser un matériau, sont dépendantes de ces éventuelles différences de température et de masse ablatée propres aux conditions expérimentales.

**L'art antérieur :**

Afin de pallier à la variation de température du plasma entre les courbes étalons et les mesures expérimentales, il est connu d'évaluer la température du plasma.

De tels procédés sont décrits, par exemple, dans la publication intitulée « Correction of matrix effects in quantitative elemental analysis with laser ablation optical emission spectrometry", de C. Chaléard, P. Mauchien, N. Andre, J. Uebbing, J.L. Lacour, C.J. Geertsen, parue dans le journal « J. anal. At. Spectrom. » Vol 12, (1997), 183, qui divulgue la normalisation des intensités des raies après avoir effectué l'évaluation de la température du plasma grâce au rapport des intensités de deux raies d'émission d'un même élément issues du plasma généré par le faisceau laser, ou dans le brevet WO 99/49301 PCT/EP99/01842, qui divulgue une normalisation de la masse ablatée après avoir évalué la température du plasma.

US 4,690,558 décrit un procédé et un dispositif d'analyse spectroscopique d'émission au moyen d'un laser. US 5,991,020 décrit un procédé de détermination de la concentration d'espèces atomiques dans les gaz et les solides.

**L'invention :**

**Constatations propres à l'invention :**

La présente invention résulte de plusieurs constatations propres à l'invention, à savoir :

i) l'erreur liée à la détermination de la température du plasma entraîne de fortes incertitudes sur les mesures de concentration d'un matériau, d'au moins 20%, provoquées par l'incertitude sur des données spectroscopiques et par la présence d'une fonction exponentielle dans le calcul de la température, comme décrit ultérieurement, ce qui augmente l'imprécision sur les résultats.

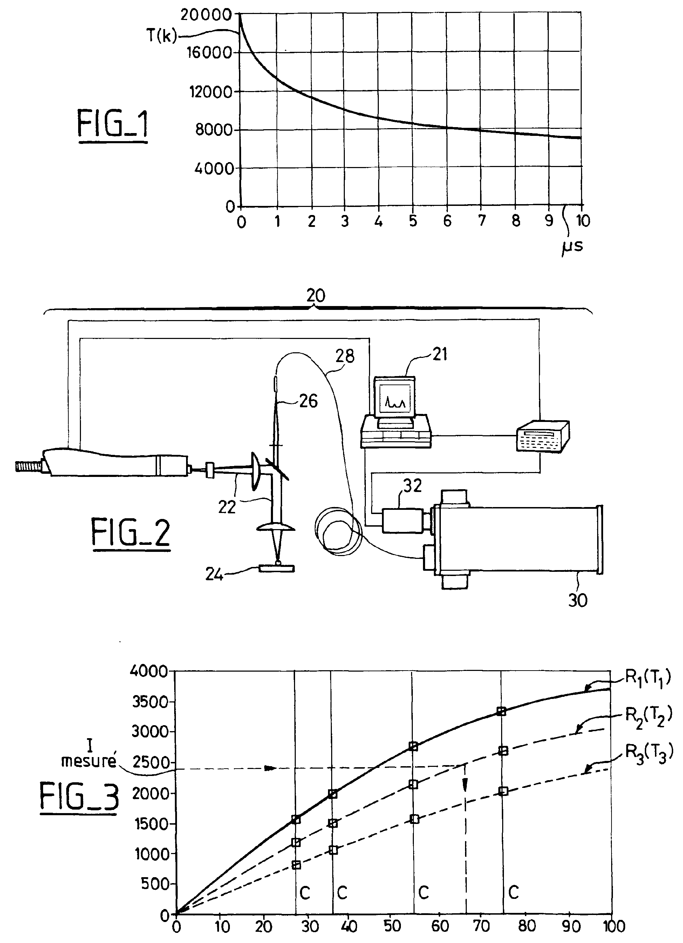

ii) la température du plasma diminue au cours du temps après l'ablation de matière effectuée par un pulse laser, comme montré sur la figure 1 qui représente la température d'un plasma (axe des ordonnées, en Kelvin) en fonction du temps (axe des abscisses, en $\mu$s) écoulé depuis l'ablation.

Dès lors, le délai d'acquisition $t_d$, c'est à dire le retard entre le pulse laser et la mesure des photons émis par le plasma, peut être choisi pour permettre la mesure des paramètres du plasma à une température souhaitée.

**Enoncé de l'invention :**

C'est pourquoi, l'invention concerne un procédé d'analyse physicochimique d'un matériau lors de son ablation par un pulse laser utilisant le rapport des intensités de deux raies d'émission issues d'un élément traceur présent dans le plasma généré par le faisceau laser, caractérisé en ce qu'on détermine la concentration d'un élément à doser dans ce plasma au moyen de mesures étalons indiquant une correspondance entre la concentration de cet élément à doser et l'intensité d'une raie d'émission d'une part, et différents rapports entre les intensités de deux raies d'un élément traceur d'autre part, ces rapports étant représentatifs de la température du plasma.

Dans une réalisation préférée de l'invention, les différents rapports d'intensités des deux raies d'un élément traceur sont sélectionnés en faisant varier le délai d'acquisition.

Grâce à l'invention, la température du plasma est caractérisée par le rapport $R(T)$ de deux raies d'un élément choisi comme traceur. En d'autres termes, la température du plasma est caractérisée par un paramètre qui peut facilement être déterminé et/ou modifié.

Ainsi, il est possible de prédéterminer à l'aide d'un matériau étalon différentes températures d'un plasma pouvant être rencontrées en LIBS, notamment dues à la défocalisation du laser ou aux effets de matrice, chaque température étant caractérisée par un rapport $R(T)$ entre les intensités de deux raies d'un élément traceur tandis que chaque mesure peut être obtenue avec différents délais.

Dès lors, lorsqu'on compare des mesures expérimentales avec des mesures étalons présentant un même rapport $R(T)$, on se place dans des conditions expérimentales de températures proches des conditions de température d'établissement des mesures étalons, ce qui permet de s'affranchir des incertitudes déjà soulignées entre la concentration d'un matériau et l'intensité de ses raies lors des variations de température du plasma.

Dans un mode de réalisation, on modifie le délai d'acquisition (td), c'est à dire le retard entre le pulse d'ablation laser et la mesure d'intensités de raies dans le plasma, afin de modifier $R(T)$ le rapport représentatif de la température du plasma.

Selon un mode de réalisation, on utilise un élément traceur distinct de l'élément à doser.

Dans un mode de réalisation, on indique la variation de la concentration de l'élément à doser dans des tableaux tel que, pour un même rapport $R(T)$ représentatif de la température, des mesures de l'intensité d'au moins une raie de l'élément à doser sont fonction de différentes concentrations de cet élément à doser présent dans les matériaux étalons.

Selon un mode de réalisation, à partir des tableaux, on établit des courbes reliant les mesures de l'intensité d'au moins une raie de l'élément à doser en fonction de différentes concentrations de cet élément à doser, par exemple au moyen d'une régression de type linéaire ou d'ordre 2.

Dans un mode de réalisation, on utilise une méthode de normalisation de la masse ablatée et/ou une méthode de normalisation par rapport à l'élément prépondérant ou un élément de concentration connu.

Selon un mode de réalisation, on détermine la concentration d'un élément à doser en effectuant la moyenne de mesures obtenues par différents tirs de faisceau laser.

Dans un mode de réalisation, on utilise comme élément traceur l'élément à doser lui-même.

L'invention concerne également un système d'analyse physicochimique d'un matériau lors de son ablation par un pulse laser, ce système utilisant le rapport des intensités de deux raies d'émission d'un élément traceur issues du plasma généré par le faisceau laser, caractérisé en ce qu'il comprend des moyens pour déterminer la concentration d'un élément à doser dans ce plasma au moyen de mesures étalons indiquant la correspondance entre la concentration de cet élément à doser, la variation de l'intensité d'une raie d'émission et différents rapports $R(T)$ entre les intensités de deux raies de l'élément traceur, ces rapports étant représentatifs de la température du plasma.

D'autres caractéristiques et avantages de l'invention apparaîtront avec la description effectuée ci-dessous; à titre illustratif et non limitatif, effectuée en référence aux figures ci-jointes sur lesquelles :

- la figure 1, déjà décrite, représente une variation des température d'un plasma après une ablation laser, en fonction du temps.
- la figure 2 représente un système conforme à l'invention,
- la figure 3 représente des courbes d'étalonnage déterminées conformément à l'invention.

Le procédé d'analyse physicochimique par ablation laser mis en oeuvre par un système 20 (figure 2) conforme à l'invention comprend des moyens, par exemple un ordinateur 21, pour déterminer la concentration d'un élément à doser dans un matériau au moyen de mesures préalables représentant la variation de la concentration de cet élément en fonction de la variation de l'intensité d'au moins une raie d'émission et de différents rapports $R(T)$ entre les intensités de deux raies d'un élément traceur, ces rapports étant représentatifs de la température du plasma.

A cet effet, un faisceau laser 22 est focalisé sur un matériau 24 à analyser. L'échauffement de la surface de ce matériau 24 induit la création d'un plasma émetteur de lumière composée de raies de différentes longueurs d'ondes, chaque longueur d'onde d'émission étant caractéristique d'une transition atomique précise et donc d'un élément.

Le rayonnement 26 est récupéré, dans cet exemple, par une fibre optique 28 puis analysé par un spectromètre 30. Une caméra 32 permet de mesurer l'intensité des raies d'émission dans un créneau temporel choisi par l'utilisateur, l'intensité des raies d'émission permettant d'obtenir, à partir de courbes d'étalonnage, des informations sur la composition du matériau.

A cet effet, le plasma est supposé être en Equilibre Thermodynamique Local (LTE), ce qui permet d'utiliser la loi de Boltzmann décrivant l'évolution de la population des niveaux électroniques des atomes et des ions. Cette condition est, en général, remplie lorsque la mesure des photons émis par le plasma est réalisée suffisamment longtemps après le tir laser (typiquement 250 ns à 1us), ce retard par rapport à l'ablation laser étant appelé délai d'acquisition $t_d$.

Par ailleurs, la durée durant laquelle le comptage de photons est effectué est appelée durée d'acquisition tg (typiquement de 250ns à 10$\mu$s).

Pendant cette durée d'acquisition, l'intensité mesurée d'une raie à la longueur d'onde $\lambda$ d'un élément i peut s'écrire sous la forme:

$$I_i^\lambda = K(\lambda)\frac{hc}{\lambda}\frac{C_iN_0}{Z_i(T)}gA.e^{-\frac{E_j}{kT}} \qquad (1)$$

Où h est la constante de Planck, c la célérité de la lumière dans le vide, $\lambda$ la longueur d'onde des photons émis pour cette transition, $C_i$ la concentration atomique ou ionique de l'élément i dans le plasma, $N_0$ le nombre total l'atomes et d'ions présents dans le plasma, $Z_i(T)$ la fonction de partition de l'élément i à une température T, gA la probabilité pour la transition considérée, $E_j$ l'énergie du niveau supérieur de la transition, k la constante de Boltzmann, T la température du plasma et $K(\lambda)$ un facteur prenant en compte les rendements de détection de l'émission du plasma.

Il apparaît donc que l'intensité d'une raie d'émission dépend des paramètres spectroscopiques $(\lambda,Z_i(T),gA,E)$, de $K(\lambda)$ et des caractéristiques du plasma $(C_i, N_0, T)$, cette intensité pouvant être mesurée expérimentalement.

Les paramètres spectroscopiques sont généralement connus, ou peuvent être éliminés lors de mesure en relatif par rapport à un étalon.

De façon analogue aux paramètres spectroscopiques, le facteur de proportionnalité $K(\lambda)$ peut être éliminé lors de mesure en relatif utilisant les courbes d'étalonnage.

Pour connaître la concentration $C_i$ de l'élément à analyser, il reste donc deux paramètres restant inconnus que sont la température du plasma T et le nombre total de d'atomes et d'ions $N_0$ participant au plasma.

Conformément à l'invention, par application de l'équation de Boltzmann (1) et pour un même élément, le rapport d'intensité des deux raies d'émissions peut s'écrire:

$$R(T) = \frac{I_1}{I_2}(T) = \frac{\lambda_2 gA_1}{\lambda_1 gA_2}.e^{\frac{(E_1-E_2)}{kT}} \qquad (2)$$

où les indices "$_1$" et "$_2$" désignent respectivement les paramètres s'appliquant à la transition 1 et 2 de l'élément traceur, $I_1$ et $I_2$ sont les intensités des deux raies de l'élément traceur considéré tandis que ce rapport R(T) évolue car la température T diminue au cours du temps, comme déjà montré sur la figure 1.

Par la suite, on utilise R(T) comme paramètre représentatif de la température du plasma au moment de l'acquisition ce qui permet de créer un abaque à partir d'une courbe d'étalonnage usuelle mais à laquelle une dimension supplémentaire est ajoutée, cette dimension supplémentaire étant le rapport R(T) qui caractérise la température du plasma.

Typiquement, l'acquisition démarre entre 250ns et 1 $\mu$s après l'ablation laser et la fenêtre d'exposition de la caméra varie entre 250ns et 10$\mu$s.

Selon d'autres variantes, on peut utiliser au moins l'un des éléments suivants dans le système: un polychromateur ou un spectromètre à échelle, une collection du signal directement par des lentilles ou directement par fibre ou encore une focalisation du faisceau laser par l'intermédiaire d'un objectif de microscope plutôt que par des lentilles classiques.

Les acquisitions des raies peuvent être effectuées de façon séquentielle, au tir à tir, elles peuvent aussi résulter d'une moyenne ou d'une sommation de plusieurs acquisitions effectuées dans des conditions analogues d'analyse.

Il convient de noter que l'élément traceur utilisé pour calculer R(T) peut être l'élément à doser lui-même.

Des abaques conformes à l'invention, tel que celui représenté sur la figure 3 et détaillé ultérieurement, présentent donc l'intensité d'une raie en fonction, d'une part, de la concentration de l'élément à doser et, d'autre part, du rapport de deux raies d'un élément traceur.

$$I=f([C],R(T)).$$

La création d'un tel abaque s'effectue à partir de matériaux étalons contenant chacun l'élément traceur à une concentration quelconque et l'élément à doser à différentes concentrations connues.

En mesurant pour chaque matériau étalon l'intensité d'une raie d'émission de l'élément à doser en fonction de la concentration de l'élément à doser et du rapport R(T), les résultats peuvent être présentés sous la forme d'un tableau du type : I=f([C],R(T)).

(A)

| I=f(C,R) | $C_1$ | $C_2$ | $C_3$ | $C_4$ | $C_5$ |
|----------|-------|-------|-------|-------|-------|
| $R_1(T_1)$ | | | | | |
| $R_2(T_2)$ | | | | | |
| $R_3(T_3)$ | | | | | |

Dans l'exemple du tableau (A) ci-dessus, on mesure trois raies d'émissions (une raie de l'élément à analyser et deux raies de l'élément traceur) pour un délai d'acquisition $t_{d1}$ avec le premier étalon de concentration $C_1$.

Puis on détermine la valeur de R(T) ($R_1(T_1)$) et on reporte la valeur de l'intensité de la raie de l'élément à doser dans le tableau.

En répétant cette mesure avec un autre délai $t_{d2}$, une nouvelle valeur d'intensité ainsi qu'une nouvelle valeur de R ($R_2(T_2)$) sont obtenues, cette nouvelle valeur étant également reportée dans le tableau.

L'opération se poursuit avec autant de mesures souhaitées et pour tous les autres étalons requis, les valeurs $R_i(T_i)$ mesurées devant être égales aux valeurs obtenues avec le premier étalon aux incertitudes près.

Dans le cas où la valeur de R(T) ne serait pas exactement égale à la valeur de $R_i(T_i)$ du premier étalon pour le même délai tdi, il est possible d'ajuster légèrement le délai $t_{di}$ de façon à faire coïncider les valeurs de $R_i(T_i)$ avec les valeurs obtenues par le premier étalon.

Une fois construit, le tableau permet d'obtenir des courbes d'étalonnages, par exemple en effectuant une régression de type linéaire ou en puissance d'ordre 2 entre les points mesurés. Les courbes ainsi paramétrées peuvent s'écrire sous la forme $I(R)=a_2(R).C^2+ a_1(R).C+ a_0(R)$. Dans le cas où les courbes d'étalonnages seraient des droites, les équations s'écrivent plus simplement sous la forme $I(R)=a_1(R).C+ a_0(R)$. Les paramètres $a_2(R)$, $a_1(R)$, $a_0(R)$ sont à déterminer à partir des points de mesures.

Chaque courbe correspond alors à une température de plasma caractérisée par le rapport $R_i(T_i)$. La figure 3 représente les trois courbes $R_i(T_i)$ obtenues selon le procédé décrit précédemment.

Lors de la création de l'abaque et dans le cas où la quantité de matière ablatée serait différente pour les différents étalons, il est possible d'utiliser en plus une méthode de normalisation de la masse ablatée et/ou une méthode connue de normalisation par rapport à l'élément prépondérant ou un élément de concentration connu.

Dans ce dernier cas, les intensités de raies des éléments à mesurer sont divisées par l'intensité d'une raie de l'élément majoritaire.

$$I_{i\,normalisée} = \frac{I_i}{I_{élément\,max}}$$

Une autre méthode connue permet de tenir compte de la quantité de matière ablatée en normalisant la somme des concentrations.

A cet effet, on multiplie les concentrations des éléments dosés par un même coefficient $\alpha$ tel que $\alpha\Sigma(Ci)=1$,

mais ce procédé présente l'inconvénient de requérir la mesure de tous les éléments présents dans le matériau à analyser.

Lorsque les analyses ont lieu à pression atmosphérique, il est possible de relier de façon linéaire la masse ablatée à l'intensité de l'onde sonore émise par la création du plasma, comme décrit par M.Chaléard dans la publication déjà mentionnée.

Par la suite, l'utilisation de l'abaque pour l'analyse d'un échantillon inconnu ne requiert que la mesure des intensités simultanées de la raie d'intérêt de l'élément à doser et des deux raies de l'élément traceur pour un délai $t_d$ quelconque.

Il est clair qu'il convient, dans ce cas, de se placer dans les conditions où le rapport signal sur bruit est le meilleur.

Comme déjà indiqué, le rapport des deux raies ($I_1/I_2 = R_{mesuré}$) permet de savoir sur quelle courbe la lecture doit se faire et ainsi, en reportant la valeur de l'intensité mesurée sur la courbe $R_{mesuré}$, d'en déduire la concentration de l'élément.

Par exemple, sur la figure 3, on suppose qu'une mesure de l'intensité d'un élément à doser a révélé une intensité de 2250 u.a. (unités arbitraires) pour des conditions expérimentales telles que $R_{mesuré} = R_2$.

Lorsque la valeur $R_{mesuré}$ se situe entre deux valeurs étalons de l'abaque, il est possible, soit d'utiliser une interpolation linéaire, soit de jouer sur le délai $t_d$ pour se placer exactement dans le cas $R_{mesuré}=R_1$ ou $R_2$ ou $R_3$.

Dans le cas où $R_{mesuré} = R_2$ de la figure 3, une interpolation linéaire de la courbe $R_2$ permet de déterminer, en projetant la valeur de l'intensité sur la courbe $R_2$, que la concentration de l'élément à doser est d'approximativement 65% du matériau analysé.

Le procédé peut avantageusement être mis en oeuvre par un ordinateur ou un microprocesseur qui peut être soit intégré au système de la figure 3, notamment au spectromètre, soit déporté pour permettre une analyse à distance et/ou à posteriori des mesures.

En résumé, il apparaît clairement que les avantages d'un procédé ou d'une méthode conforme à l'invention sont nombreux, à savoir :

- la méthode nécessite une diversité réduite d'étalons au sens physicochimique pour l'analyse de matériaux de caractéristiques physicochimiques très variés.
  Lors de la création de l'abaque pour un même étalon, la quantité de matière ablatée reste toujours la même quelle que soit la valeur de R. En outre,
- La méthode s'applique au matériau de composition physicochimique complètement inconnue.
- La méthode s'applique lorsque l'énergie du laser déposé sur la surface est différente de celle utilisée lors de la création des abaques.
- L'élément traceur peut être l'un des éléments à analyser lui-même.
- Cette méthode est précise car elle fonctionne en relatif, comme les techniques d'étalonnages classiques. Il n'y a pas de calcul du paramètre K(λ) ni de détermination des données spectroscopiques $gA_i$ et $Z_i(T)$, ces déterminations étant sources d'erreur.
- La méthode permet un gain de temps lors des mesures (plus besoin d'un étalonnage systématique pour chaque type de matériau à analyser).
- La méthode permet de s'affranchir de la nécessité de disposer d'étalons représentatifs (quelquefois inexistant).
- La méthode permet d'élargir le champ d'application de la technique en rendant possible l'analyse d'échantillons hétérogènes ou de matrices inconnues.

La présente invention concerne toutes les méthodes d'analyses qui utilisent l'émission optique d'un plasma et en particulier la technique LIBS. A titre d'exemple, l'invention peut s'appliquer en industrie métallurgique pour le contrôle en ligne des alliages fondus ou solides, dans l'industrie plastique pour le contrôle qualité ou le tri des plastiques, dans l'industrie pharmaceutique pour contrôler la composition des produits en sortie de chaîne, dans le domaine du tri des déchets comme le plastique ou les métaux, dans les mesures environnementales (surveillance de l'atmosphère, des sols, des eaux), en géologie lors des analyses rapides de roche, dans l'industrie nucléaire, notamment dans l'analyse à distance et sans contact sur des solides ou des liquides, dans l'entretien ou la sauvegarde du patrimoine, par exemple lors de datations et/ou analyses de l'origine des peintures, dans la réalisation de cartographie par technique LIBS.

## Revendications

**1.** Procédé d'analyse physicochimique d'un matériau (24) lors de son ablation par un pulse laser (22), ce procédé utilisant le rapport des intensités de deux raies d'émission d'un élément traceur issues du plasma généré par le pulse laser (22), **caractérisé en ce qu'**on détermine la concentration d'un élément à doser dans ce plasma au moyen de mesures étalons indiquant la correspondance entre la concentration de cet élément à doser et l'intensité d'une raie d'émission d'une part, et de différents rapports R(T) entre les intensités d'au moins deux raies de l'élément traceur d'autre part, ces rapports étant représentatifs de la température du plasma.

**2.** Procédé selon la revendication 1 **caractérisé en ce qu'**on modifie le délai d'acquisition (td), c'est à dire le retard entre le pulse d'ablation laser et la mesure d'intensités de raies dans le plasma, afin de modifier le rapport R(T) représentatif de la température du plasma.

**3.** Procédé selon la revendication 1 ou 2 **caractérisé en ce qu'**on utilise un élément traceur distinct de l'élément à doser.

**4.** Procédé selon l'une des revendications 1 ou 2 **caractérisé en ce qu'**on utilise comme élément traceur l'élément à doser lui-même.

**5.** Procédé selon l'une des revendications précédentes **caractérisé en ce qu'**on indique la variation de la concentration de l'élément à doser dans des tableaux tel que, pour un même rapport R(T) représentatif de la température, des mesures de l'intensité d'au moins une raie de l'élément à doser sont fonction de différentes concentrations de cet élément à doser présent dans les matériaux étalons.

**6.** Procédé selon l'une des revendications précédentes **caractérisé en ce que**, à partir des tableaux, on établit des courbes reliant les mesures de l'intensité d'au moins une raie de l'élément à doser en fonction de différentes concentrations de cet élément à doser, par exemple au moyen d'une régression de type linéaire ou d'ordre 2.

**7.** Procédé selon la revendication 5 ou 6 **caractérisé en ce qu'**on utilise une méthode de normalisation de la masse ablatée et/ou une méthode de normalisation par rapport à l'élément prépondérant ou un élément de concentration connu.

**8.** Procédé selon l'une des revendications précédentes **caractérisé en ce qu'**on détermine la concentration d'un élément à doser en effectuant la moyenne de mesures obtenues par différents tirs de faisceau laser.

**9.** Système d'analyse physicochimique d'un matériau lors de son ablation par un pulse laser, ce système utilisant le rapport des intensités de deux raies d'émission d'un même élément traceur issues du plasma généré par le faisceau laser, **caractérisé en ce qu'**il comprend des moyens pour déterminer la concentration d'un élément à doser dans ce plasma au moyen de mesures étalons indiquant la correspondance entre la concentration de cet élément à doser et la variation de l'intensité d'une raie d'émission d'une part, et différents rapports R(T) entre les intensités de deux raies de l'élément traceur d'autre part, ces rapports étant représentatifs de la température du plasma.

**10.** Moyens logiciels destinés à l'analyse physicochimique d'un matériau lors de son ablation par un pulse laser, ces moyens logiciels utilisant le rapport des intensités de deux raies d'émission d'un élément traceur issues du plasma généré par le faisceau laser, **caractérisé en ce qu'**ils déterminent la concentration d'un élément à doser dans ce plasma au moyen de mesures étalons indiquant la correspondance entre la concentration de cet élément à doser et différentes intensités d'une raie d'émission d'une part, et différents rapports R(T) entre les intensités de deux raies de l'élément traceur d'autre part, ces rapports étant représentatifs de la température du plasma, selon le procédé conforme à l'une des revendications 1 à 8.

**Claims**

**1.** Method for physicochemical analysis of a material (24) when it is subjected to ablation by a laser pulse (22), which method uses the ratio of intensities of two emission lines of a tracer element, from the plasma generated by the laser pulse (22), **characterised in that** the concentration of an element to be assayed in this plasma is determined by means of calibration measurements indicating a correspondence between the concentration of this element to be assayed and the intensity of an emission line on the one hand, and different ratios R(T) between the intensities of at least two lines of the tracer element, on the other hand, which ratios are representative of the plasma temperature.

**2.** Method according to claim 1, **characterised in that** the acquisition delay (td), i.e. the delay between the laser ablation pulse and the measurement of line intensities in the plasma, is modified so as to modify the ratio R(T) representative of the plasma temperature.

**3.** Method according to claim 1 or 2, **characterised in that** a tracer element distinct from the element to be assayed is used.

**4.** Method according to one of claims 1 or 2, **characterised in that** the element to be assayed itself is used as the tracer element.

**5.** Method according to one of the previous claims, **characterised in that** the variation in the concentration of the element to be assayed is indicated in tables such that, for the same ratio R(T) representing the temperature, measurements of the intensity of at least one line of the element to be assayed, are dependent on Various concentrations of this element to be assayed present in the calibration materials.

**6.** Method according to one of the previous claims, **characterised in that,** on the basis of the tables, curves are established linking the measurements of the intensity of at least one line of the element to be assayed as a function of various concentrations of this element to be assayed, for example by means of a linear regression or a regression of order 2.

**7.** Method according to claim 5 or 6, **characterised in that** a method for normalisation of the ablated mass and/or a method for normalisation with respect to the predominant element or an element in a known concentration is used.

**8.** Method according to one of the previous claims, **characterised in that** the concentration of an element to be assayed is determined by obtaining the mean of the measurements obtained by various laser beam shots.

**9.** System for physicochemical analysis of a material when it is subjected to ablation by a laser pulse, which system uses the ratio of the intensities of two emission lines of a same tracer element, from the plasma generated by the laser beam, **characterised in that** it includes means for determining the concentration of an element to be assayed in this plasma by means of calibration measurements indicating the correspondence between the concentration of this element to be assayed and the variation in intensity of an emission line on the one hand, and various ratios R(T) between the intensities of two lines of the tracer element on the other hand, which ratios are representative of the plasma temperature.

**10.** Software means intended for the physicochemical analysis of a material when it is subjected to ablation by a laser pulse, which software means use the ratio of intensities of two emission lines of a tracer element, from the plasma generated by the laser beam, **characterised in that** they determine the concentration of an element to be assayed in this plasma by means of calibration measurements indicating the correspondence between the concentration of this element to be assayed and different intensities of an emission line on the one hand, and different ratios R(T) between the intensities of two lines of the tracer element on the other hand, which ratios are representative of the plasma temperature, according to the method of one of claim 1 to 8.

**Patentansprüche**

**1.** Verfahren zur physikalisch-chemischen Analyse eines Materials (24) während seiner Abtragung durch einen Laserpuls (22), wobei dieses Verfahren das Verhältnis zweier aus dem durch den Laserpuls (22) erzeugten Plasma stammender Emissionslinien eines Indikatorelements benützt, **dadurch gekennzeichnet, dass** die Konzentration eines in diesem Plasma zu analysierenden Elements einerseits mittels Kalibrierdaten, die den Bezug zwischen der Konzentration dieses zu analysierenden Elements und der Intensität einer Emissionslinie angeben, und unterschiedlicher Verhältnisse R(T) zwischen den Intensitäten mindestens zweier Linien des Indikatorelements andererseits bestimmt wird, wobei diese Verhältnisse für die Plasmatemperatur kennzeichnend sind.

**2.** Verfahren gemäß Anspruch 1, **dadurch gekennzeichnet, dass** der Erfassungszeitraum (td), das heißt die Verzögerung zwischen dem Abtragungslaserpuls und der Messung der Linienintensitäten in dem Plasma verändert wird, um das für die Plasmatemperatur kennzeichnende Verhältnis R(T) zu verändern.

**3.** Verfahren gemäß Anspruch 1 oder 2, **dadurch gekennzeichnet, dass** ein von dem zu analysierenden Element verschiedenes Indikatorelement verwendet wird.

**4.** Verfahren gemäß einem der Ansprüche 1 oder 2, **dadurch gekennzeichnet, dass** als Indikatorelement das zu analysierende Element selbst verwendet wird.

**5.** Verfahren gemäß einem der vorangehenden Ansprüche, **dadurch gekennzeichnet, dass** die Änderung der Konzentration des zu analysierenden Elements in Tabellen angegeben wird, bei denen für dasselbe, für die Temperatur kennzeichnende Verhältnis Messungen der Intensität wenigstens einer Linie des zu analysierenden Elements eine Funktion unterschiedlicher Konzentrationen dieses in den Kalibriermaterialien vorliegenden, zu analysierenden Elements sind.

6. Verfahren gemäß einem der vorangehenden Ansprüche, **dadurch gekennzeichnet, dass** ausgehend von den Tabellen Kurven aufgestellt werden, die die Messungen der Intensität wenigstens einer Linie des zu analysierenden Elements als Funktion verschiedener Konzentrationen dieses zu analysierenden Elements zum Beispiel mittels einer Regression des linearen Typs oder zweiter Ordnung verbinden.

7. Verfahren gemäß Anspruch 5 oder 6, **dadurch gekennzeichnet, dass** ein Verfahren der Normalisierung der abgetragenen Masse und/oder ein Normalisierungsverfahren bezüglich des vorherrschenden Elements oder eines Elements bekannter Konzentration angewendet wird.

8. Verfahren gemäß einem der vorangehenden Ansprüche, **dadurch gekennzeichnet, dass** die Konzentration eines zu analysierenden Elements durch Mitteln der durch verschiedene Laserstrahlschüsse erhaltenen Messungen bestimmt wird.

9. Physikalisch-chemisches Analysensystem für ein Material während seiner Abtragung durch einen Laserpuls, wobei dieses System das Verhältnis der Intensitäten zweier aus dem durch den Laserstrahl erzeugten Plasma stammenden Emissionslinien desselben Indikatorelements benützt, **dadurch gekennzeichnet, dass** es Mittel zum Bestimmen der Konzentration eines zu analysierenden Elements in diesem Plasma einerseits mittels Kalibrierdaten, die den Bezug zwischen der Konzentration dieses zu analysierenden Elements und der Intensitätsänderung einer Emissionslinie angeben, und unterschiedlicher Verhältnisse R(T) zwischen den Intensitäten zweier Linien des Indikatorelements andererseits umfasst, wobei diese Verhältnisse für die Plasmatemperatur kennzeichnend sind.

10. Programme, die zur physikalisch-chemischen Analyse eines Materials während seiner Abtragung durch einen Laserpuls bestimmt sind, wobei diese Programme das Verhältnis der Intensitäten zweier aus dem durch den Laserstrahl erzeugten Plasma stammender Emissionslinien desselben Indikatorelements benützen, **dadurch gekennzeichnet, dass** sie die Konzentration eines zu analysierenden Elements in diesem Plasma mittels Kalibrierdaten, die den Bezug zwischen der Konzentration dieses zu analysierenden Elements und unterschiedlichen Intensitäten einer Emissionslinie einerseits angeben, und unterschiedlicher Verhältnisse R(T) zwischen den Intensitäten zweier Strahlen des Indikatorelements andererseits, wobei diese Verhältnisse für die Plasmatemperatur kennzeichnend sind, gemäß einem Verfahren nach einem der Ansprüche 1 bis 8 bestimmen.

FIG_1

FIG_2

FIG_3

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 9949301 A
- EP 9901842 W
- US 4690558 A
- US 5991020 A

**Littérature non-brevet citée dans la description**

- **C. CHALÉARD ; P. MAUCHIEN ; N. ANDRE ; J. UEBBING ; J.L. LACOUR ; C.J. GEERTSEN.** Correction of matrix effects in quantitative elemental analysis with laser ablation optical emission spectrometry. *J. anal. At. Spectrom.,* 1997, vol. 12, 183